# EUROPEAN PATENT APPLICATION

(11) **EP 2 966 907 A1**
(43) Date of publication of application: **13.01.2016**
(21) Application number: 14760852.5
(22) Date of filing: 24.01.2014
(51) Int. Cl.: H04W 48/08

(54) **SENDING PROCESSING AND RECEIVING PROCESSING METHOD AND DEVICE FOR SERVICE INDICATION INFORMATION**

(30) Priority: 08.03.2013 CN 201310074668
(71) Applicant: ZTE Corporation, Shenzhen City, Guangdong Province 518057 (CN)
(72) Inventor: LV, Kaiying, Shenzhen Guangdong Province 518057 (CN); HAN, Zhiqiang, Shenzhen Guangdong Province 518057 (CN); SUN, Bo, Shenzhen Guangdong Province 518057 (CN)
(74) Representative: Novagraaf Technologies
(86) International application number: PCT/CN2014/071338
(87) International publication number: WO 2014/134988

(57) **Abstract**

The embodiments of the present invention provides a method and device for processing the sending and receiving of service indication information, wherein the method is applied to an Access Point (AP) of a Wireless Local Area Network (WLAN). The method includes that sending time information of grouping indication information of Stations (STA) in the WLAN is acquired, wherein the sending time information is used for instructing the STAs to receive, according to sending moments indicated by the sending time information, service indication information corresponding to the STAs indicated by the grouping indication information; and the STAs indicated by the grouping indication information are notified of the sending time information. By means of the technical solution provided by the embodiments of the present invention, the technical problems in the related art that sending of service indication information is not flexibly configured yet, it is necessary to monitor each wireless frame, and the like, are solved, thereby allowing service indication information (such as paging information of a group user) to be flexibly configured, sent and quickly acquired.

## Description

### Technical Field

The embodiments of the present invention relate to the field of wireless communications, particularly to a method and device for processing the sending and receiving of service indication information.

### Background

At present, Wireless Local Area Network (WLAN) has been increasingly applied with the rapid development of WLAN in the field of wireless network. The Institute of Electrical and Electronics Engineers (IEEE) industrial specification 802.11 group has issued a series of most common WLAN technical standards including 802.11 ah, 802.11 b, 802.11 g, 802.11 n and so on in order to meet various network requirements. Other task groups have been founded one after the other subsequently to concentrate on developing specifications related to improvement of existing 802.11 technologies. For example, the IEEE has founded the 802.11 ah task group with the development of the Internet of Things. The main task of the 802.11 ah task group is to modify and enhance a Media Access Control (MAC) layer and a Physical layer (a PHY layer) of the WLAN so as to meet requirements of networks including a smart grid, a sensor network, an environmental/agricultural monitoring network and an industrial process automation network and so on.

In the WLAN, an Access Point (AP) and a plurality of non-AP Stations (STA) associated with the AP constitute a Basic Service Set (BSS). Before using a service of the BSS, the STA needs to complete an authentication and association process with the AP. If the association succeeds, the AP allocates to the STA an Association Identifier (AID) which is an ID of the STA in the BSS.

Some typical use cases are required to support a large number of users in a new WLAN application scenario defined by the 802.11 ah task group. For example, intelligent meter requires that at most 6000 STAs can be supported under one BSS. Each STA is allocated with an AID when associated, and a system needs to report data of a large number of STAs regularly or irregularly. STAs in these application scenarios are generally powered by batteries and it is usually required that the batteries can be used in a long period of time without replacement. Therefore, the STAs will enter a mode of saving power when sending and receiving operations are not performed. Paging information, i.e. a Traffic Indication Map (TIM), also called as service indication information, is sent in regularly-transmitted system information, i.e. a beacon frame, in order to notify the STA in the mode of saving power of whether there is buffered data to be transmitted. Each bit in the TIM is in one-to-one correspondence with a AID to indicate whether there is downlink data to be transmitted in a STA corresponding with the AID.

The TIM service indication information is too long in a network supporting a large number of STAs while a piece of system information (a beacon) can only carry service indication of a certain number of STAs. It is proposed that the TIM service indication information is processed by pages and blocks so that each system message (a beacon) only carries a segment of information in the TIM service indication information. It is specified in the related art that AID spaces of users are managed by pages and segments, and TIM indication information is sent by segments, thereby ensuring that service indication and resource allocation of STAs are dispersed. Structured staged processing of AID spaces of users refers to processing the AID spaces of the users according to three stages, i.e. pages, blocks and sub-blocks. Each page may be divided into Page Segments (PS) including several blocks, and each block includes several sub-blocks. For example, the AID spaces of the users are divided into 4 pages totally, each page is divided into several segments, and each PS includes several blocks. The TIM indication information is processed by TIM segments, only one or more TIM segments is carried in each beacon, and one TIM segment carries service indication information of a STA corresponding to one PS.

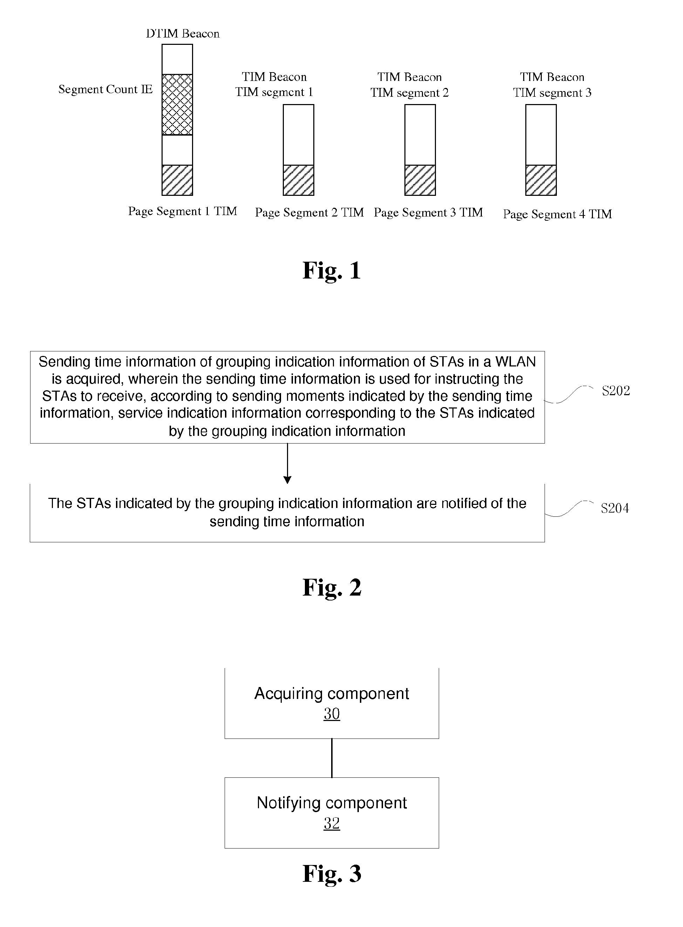

A non-AP STA monitors, at an interval of several beacon intervals specified by the system, a beacon carrying a Delivery TIM (DTIM). The beacon simultaneously carries one or more grouping indication information Elements (segment count Indication Elements (IE)) for indicating a mapping relation between one or more PSs in one group with corresponding segment service indication information, and transmission locations of the PSs. The mapping relation and the transmission locations are notified to the non-AP STA. The non-AP STA determines, according to the grouping indication information, a location of a TIM segment where the service indication information of the non-AP STA locates, so as to monitor a corresponding beacon to further acquire service indication information and resource allocation information, as shown in Fig. 1.

In the related art, TIM segments corresponding to each PS indicated in one segment count IE are arranged in turn orderly, i.e. a TIM segment corresponding to a first PS1 is carried in a DTIM beacon, a TIM segment corresponding to a second PS2 is carried in a TIM beacon after the DTIM, and so on. When a plurality of segment count IEs are carried in a certain DTIM beacon, it is a problem to arrange TIM segments corresponding to different PSs in subsequent TIM beacons so as to disperse service indication information and resource allocation information of STAs more effectively. It is a problem to provide more flexible sending intervals of service indication information for different groups according to service characteristics of the groups, and a problem to avoid the necessity that each segment station monitors each DTIM beacon, so as to further improve the power saving capability of the STAs.

At present, there is no effective solution yet for the problems in the related art.

### Summary

Directed to the technical problems in the related art that there is no solution for flexibly configuring the sending of service indication information, it is necessary to monitor each wireless frame, and the like, embodiments of the present invention provide a method and device for processing the sending and receiving of service indication information, so as to at least solve the above problems.

According to an embodiment of the present invention, a method for processing the sending of service indication information is provided, applied to an AP of a WLAN, includes that sending time information of grouping indication information of STAs in the WLAN is acquired, wherein the sending time information is used for instructing the STAs to receive, according to sending moments indicated by the sending time information, service indication information corresponding to the STAs indicated by the grouping indication information; the STAs indicated by the grouping indication information are notified of the sending time information.

In an embodiment of the present invention, the sending time information includes at least one of the followings: a sending interval of the grouping indication information, sending time offset information of service indication information in the sending interval, and a designated sending moment of the service indication information in the sending interval, wherein the sending interval is used for indicating a time interval between adjacent grouping indication information.

In an embodiment of the present invention, the operation that the STAs indicated by the grouping indication information are notified of the sending time information includes that a wireless frame is sent to the STAs indicated by the grouping indication information, wherein the wireless frame carries the sending time information and the grouping indication information.

In an embodiment of the present invention, the sending time offset information includes: a time offset, relative to the wireless frame, of service indication information corresponding to a designated STA among the STAs indicated by the grouping indication information in a sending interval of current grouping indication information.

In an embodiment of the present invention, the designated STA includes: an STA of a first segment among STAs of a plurality of segments indicated by the grouping indication information, wherein service indication information corresponding to STAs of various segments after the STA of the first segment is arranged after service indication information corresponding to the STA of the first segment in turn.

In an embodiment of the present invention, the Sending time offset information is carried in the wireless frame by one of the following methods: the sending time offset information is indicated by a designated field; the sending time offset information is indicated implicitly by the grouping indication information.

In an embodiment of the present invention, the method of indicating the sending time offset information implicitly by the grouping indication information includes that the STAs indicated by the grouping indication information perform calculation according to segment information in the grouping indication information, and/or a sequence of the grouping indication information so as to obtain the TIM offset.

According to another embodiment of the present invention, a method for processing the receiving of service indication information is provided, applied to a STA of a WLAN and including that sending time information from an AP in the WLAN is received, service indication information corresponding to STAs indicated by grouping indication information is received according to sending moments indicated by the sending time information.

In an embodiment of the present invention, the sending time information includes at least one of the followings: a sending interval of the grouping indication information, sending time offset information of service indication information in the sending interval, and a designated sending moment of the service indication information in the sending interval, wherein the sending interval is used for indicating a time interval between adjacent grouping indication information.

In an embodiment of the present invention, the method further includes that the grouping indication information is received according to the sending interval.

According to still another embodiment of the present invention, a device for processing the sending of service indication information is provided, applied to an AP of a WLAN and including: an acquiring component, configured to acquire sending time information of grouping indication information of STAs in the WLAN, wherein the sending time information is used for instructing the STAs to receive, according to sending moments indicated by the sending time information, service indication information corresponding to the STAs indicated by the grouping indication information; a notifying component, configured to notify the STAs indicated by the grouping indication information of the sending time information.

In an embodiment of the present invention, the acquiring component is configured to acquire the sending time information including at least one of the following content: a sending interval of the grouping indication information, sending time offset information of service indication information in the sending interval, and a designated sending moment of the service indication information in the sending interval, wherein the sending interval is used for indicating a time interval between adjacent grouping indication information.

According to still another embodiment of the present invention, a device for processing the receiving of service indication information is provided, applied to a STA of a WLAN and including: a first receiving component, configured to receive sending time information from an AP in the WLAN; a second receiving component, configured to receive according to sending moments indicated by the sending time information, service indication information corresponding to the STAs indicated by the grouping indication information.

In an embodiment of the present invention, the first receiving component is configured to receive the sending time information including at least one of the following content: a sending interval of the grouping indication information, sending time offset information of service indication information in the sending interval, and a designated sending moment of the service indication information in the sending interval, wherein the sending interval is used for indicating a time interval between adjacent grouping indication information.

By means of the embodiments of the present invention, the sending time information is notified to the STAs to instruct the STAs to receive, according to the sending moments indicated by the sending time information, the service indication information corresponding to the STAs indicated by the grouping indication information, thereby solving the technical problems in the related art that sending of service indication information is not flexibly configured yet, it is necessary to monitor each wireless frame, and the like, so as to allow service indication information (such as paging information of a group user) to be flexibly configured, sent and quickly acquired.

### Brief Description of the Drawings

The accompanying drawings illustrated herein are used for providing further understanding to the embodiments of the present invention and constitute a part of the application. The exemplary embodiments of the present invention and illustration thereof are used for explaining the embodiments of the present invention, instead of constituting improper limitation to the embodiments of the present invention. In the accompanying drawings:
Fig. 1 is a mapping diagram of packet service indication and a Beacon according to the related art;
Fig. 2 is a flowchart of a method for processing the sending of service indication information according to the first embodiment of the present invention;
Fig. 3 is a structural block diagram of a device for processing the sending of service indication information according to the first embodiment of the present invention;
Fig. 4 is a flowchart of a method for processing the receiving of service indication information according to the second embodiment of the present invention;
Fig. 5 is a structural block diagram of a device for processing the receiving of service indication information according to the second embodiment of the present invention;
Fig. 6 is a mapping diagram of packet service indication and a Beacon according to the third embodiment to the fourth embodiment of the present invention;
Fig. 7 is a mapping diagram of packet service indication and a Beacon according to the third embodiment to the fifth embodiment of the present invention; and
Fig. 8 is a mapping diagram of packet service indication and a Beacon according to the third embodiment to the sixth embodiment of the present invention.

### Detailed Description of the Embodiments

The embodiments of the present invention will be expounded hereinafter with reference to the accompanying drawings and in conjunction with the embodiments. It needs to be noted that the embodiments in the application and the characteristics in the embodiments may be combined with each other if there is no conflict.

### Embodiment 1

The embodiment provides a method for processing the sending of service indication information. The method is applied to an AP of a WLAN. Fig. 2 is a flowchart of a method for processing the sending of service indication information according to the first embodiment of the present invention. As shown in Fig. 2, the method includes the following steps.

Step 202: sending time information of grouping indication information of STAs in the WLAN is acquired, wherein the sending time information is used for instructing the STAs to receive, according to sending moments indicated by the sending time information, service indication information corresponding to the STAs indicated by the grouping indication information.

Step 204: the STAs indicated by the grouping indication information are notified of the sending time information.

By means of the processing steps, since the STAs are notified of the sending time information of the grouping indication information, sending of the grouping indication information may be configured flexibly. Besides, STAs of a receiver may also receive service indication information corresponding to the STAs according to sending moments indicated by the sending time information, thereby acquiring the service indication information rapidly, and improving the power saving capability.

In the embodiment, the grouping indication information at least includes one of the followings: grouping identification information, the number of segments in a group, and an offset of an initial point of the group.

In the embodiment, the sending time information may include, but is not limited to at least one of the following content: a sending interval of the grouping indication information, sending time offset informationof service indication information in the sending interval, and a designated sending moment of the service indication information in the sending interval, wherein the sending interval is used for indicating a time interval between adjacent grouping indication information, wherein the designated sending moment may manifest as, but is not limited to one of the following implementation forms.

(1) A sending moment of a first piece of sent grouping indication information is determined. Each of grouping indication information after the first piece of grouping indication information is sent after the first piece of grouping indication information according to a preset rule (e.g. the grouping indication information is sent from front to back in turn, or is sent according to other predetermined sending sequences and so on). (2) A time point is allocated to each of the grouping indication information, and when a time point corresponding to a certain piece of grouping indication information arrives, the grouping indication information is sent.

The sending time information may be sent via a dedicated message for sending the information, and may be also sent by the following methods: a wireless frame is sent to the STAs indicated by the grouping indication information, wherein the wireless frame carries the sending time information and the grouping indication information. In the embodiment, the wireless frame may include, but is not limited to a broadcast/multicast frame.

It needs to be noted that, in the embodiment, when the sending time information is sending time offset information and the sending interval, a sending moment (the sending is an offset with a current wireless frame carrying the grouping indication information in the sending interval of the current grouping indication information) of the service indication information may be determined by the sending interval of the grouping indication information and the sending time offset information of the service indication information, and the STAs may be notified of the sending locations of the service indication information thereof through the grouping indication information and the sending time offset information.

In the embodiment, the sending time offset information includes: a time offset, relative to the wireless frame, of sending service indication information corresponding to a designated STA among the STAs indicated by the grouping indication information in a sending interval of current grouping indication information. At the moment, the designated STA may be part or all of the STAs indicated by the grouping indication information.

In the embodiment, the grouping indication information may include, but is not limited to: segment information of the STAs indicated by the grouping indication information. At the moment, the sending time offset information may further include: a time offset, relative to the wireless frame, of service indication information of a STA of a first segment among a plurality of segment STAs indicated by the grouping indication information, wherein the wireless frame carries the grouping indication information, and the service indication information corresponding to the STAs of the segments after the STA of the first segment is arranged behind the service indication information corresponding to the STA of the first segment in turn. For example, the STAs indicated by the grouping indicated information are divided into 3 segments from front to back, i.e. Segment A, Segment B and Segment C, then a time offset of the service indication information of the STAs of Segment A with the wireless frame within the sending interval of the current grouping indication information may be used as the sending time offset information.

In the embodiment, the TIM offset may be carried in the wireless frame through one of the following methods: the sending time offset information is indicated by a designated field in the wireless frame; the sending time offset information is indicated implicitly by the grouping indication information, wherein the second method may manifest as the following implementation form: the STAs indicated by the grouping indication information perform calculation according to segment information in the grouping indication information, and/or a sequence of the grouping indication information so as to obtain the TIM offset. Thus, it may be also learned that there may be a plurality of pieces of the grouping indication information, and the wireless frame may carry sequence information of the plurality of pieces of the grouping indication information, wherein the sequence information may manifest as, but is not limited to the following forms: a sequence of the plurality of pieces of the grouping indication information carried in the wireless frame is the sequence information.

A device for processing the sending of service indication information is further provided in the embodiment. The device is applied to an AP of a WLAN to implement the foregoing embodiments and preferred embodiments, and what has been described will not be repeated here. Components involved in the device will be described below. As used below, the term "component" can implement a combination of software and/or hardware with predetermined functions. Although the device described by the following embodiments is preferably implemented by software, hardware or a combination of software and hardware may also be possible and conceived. Fig. 3 is a structural block diagram of a device for processing the sending of service indication information according to the first embodiment of the present invention. As shown in Fig. 3, the device includes:
an acquiring component 30, connected to a notifying component 32 and configured to acquire sending time information of grouping indication information of STAs in the WLAN, wherein the sending time information is used for instructing the STAs to receive, according to sending moments indicated by the sending time information, service indication information corresponding to the STAs indicated by the grouping indication information;
the notifying component 32, configured to notify the STAs indicated by the grouping indication information of the sending time information.

Sending of the grouping indication information may be also configured flexibly by means of functions implemented by the foregoing components. Besides, STAs of a receiver may also receive service indication information corresponding to the STAs according to sending moments indicated by the sending time information, thereby acquiring the service indication information rapidly, and improving the power saving capability.

In the embodiment, the acquiring component 30 may be further configured to acquire the sending time information including at least one of the following content: a sending interval of the grouping indication information, sending time offset information of service indication information in the sending interval, and a designated sending moment of the service indication information in the sending interval, wherein the sending interval is used for indicating a time interval between adjacent grouping indication information.

### Embodiment 2

The embodiment is similar to the first embodiment, and what is different is that the embodiment provides description at a STA side.

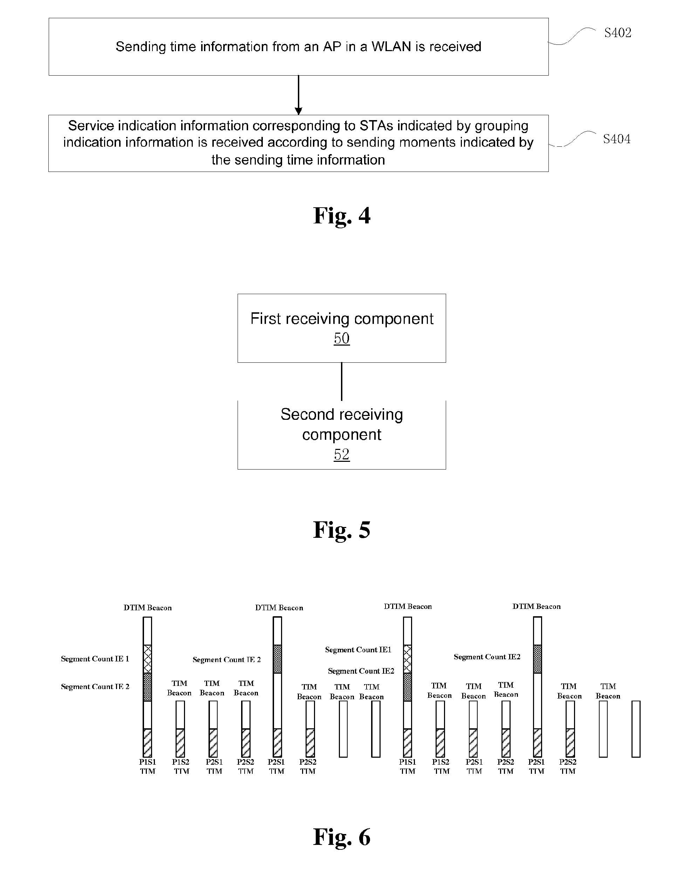

The embodiment provides a method for processing the receiving of service indication information. The method is applied to a STA of a WLAN. As shown in Fig. 4, the method includes the following steps.

Step 402: sending time information from an AP in the WLAN is received.

Step 404: service indication information corresponding to STAs indicated by grouping indication information is received according to sending moments indicated by the sending time information.

In the embodiment, the sending time information includes, but is not limited to: a sending interval of the grouping indication information, sending time offset information of service indication information in the sending interval, and a designated sending moment of the service indication information in the sending interval, wherein the sending interval is used for indicating a time interval between adjacent grouping indication information.

In the embodiment, the sending interval may be also applied to receiving of the grouping indication information. That is, the grouping indication information is received according to the sending interval, wherein different grouping indication information may correspond to the same sending interval or different sending intervals, and the grouping indication information is received in, but not limited to the receiving scenario of the service indication information in the embodiment.

In the embodiment, a device for processing the receiving of service indication information is further provided, applied to a STA of a WLAN. As shown in Fig. 5, the device includes:
a first receiving component 50, connected to a second receiving component 52 and configured to receive sending time information from an AP in the WLAN;
the second receiving component 52, configured to receive according to sending moments indicated by the sending time information, service indication information corresponding to STAs indicated by the grouping indication information.

In a preferred embodiment of the present invention, the first receiving component 50 is configured to receive the sending time information including, but not limited to the following content: a sending interval of the grouping indication information, sending time offset information of service indication information in the sending interval, and a designated sending moment of the service indication information in the sending interval, wherein the sending interval is used for indicating a time interval between adjacent grouping indication information.

The better understand the first embodiment and the second embodiment, detailed description will be provided below in combination with the third embodiment to the sixth embodiment and related accompanying drawings. The main design idea of the following embodiments is as follows.

An AP sends a wireless frame of a system message periodically, and carries one or more segment count IEs in a specific wireless frame of a system message. The segment count IEs carry a DTIM interval of grouping indication information and/or sending time offset information of service indication information within a sending interval of the grouping indication information. According to a time offset, relative to the wireless frame of the system message sent by the AP within a sending interval of current grouping indication information, of service indication information of some or all STAs in the grouping indication information, the AP sends, in a wireless frame of a target system message, service indication information to STAs of each group.

The AP may use a field, in the wireless frame of the specific system message, to explicitly indicate sending time offset information of indication information of a packet service. After receiving the wireless frame of the specific system message sent by the AP, a STA acquires a DTIM interval of grouping indication information corresponding to a group where the STA locates, and/or the sending time offset information of the indication information of the packet service, calculates a target transmission time) of a wireless frame of a target system message carrying corresponding service indication information, and receives the corresponding service indication information at the target transmission time.

The AP may also implicitly indicate the sending time offset information of the service indication information of the group through grouping information carried in the wireless frame of the specific system message. The AP notifies, through the grouping indication information carried in the wireless frame of the system message, a STA included in the grouping indication information of the number of the grouping indication information in the wireless frame of the system message and a sequence of the grouping indication information. The STA receives the wireless frame of the system message sent by the AP, acquires the grouping indication information, the number of the grouping indication information and sequence information of the grouping indication information, and performs calculation to acquire a time offset, relative to the received wireless frame of the specific system message sent by the AP, of the wireless frame of the target system message carrying the service indication information of the STA in the group, and then calculates, according to the sending time offset information acquired through the calculation, a target transmission time of the wireless frame of the target system message carrying the corresponding service indication information, and receives the corresponding service indication information at the target transmission time.

### Embodiment 3

A BSS is provided with an AP and 6000 associated non-AP STAs. The AP allocates a unique AID in the BSS for each STA during an association process. AID spaces of the STAs may be processed by groups, i.e. by PSs. For example, the AID spaces are divided into 4 pages, each of which includes 32 blocks, and each block includes 64 STAs. The AP broadcasts beacon information to the STAs, and carries a TIM/DTIM using a PS as a granularity, i.e. the TIM/DTIM includes service indication information of STAs in one or more PSs. A non-AP STA in a mode of saving power wakes up periodically to monitor the beacon information, and detects a service indication bit map in the TIM/DTIM to judge whether the AP has buffered data of the STA.

In the embodiment, all STAs under the BSS are divided into 4 groups by pages, e.g. page1, page2, page3 and page4. STAs of each page correspond to one segment count IE containing information including a page index, and a segment count of a group corresponding to the page index and so on. For example, there are two PSs, i.e. PS1 and PS2. One DTIM beacon carries segment count IEs of one or more groups, and a segment count IE of each group carries information including the page index, the segment count and so on, and also contains a DTIM interval of the segment count IE corresponding to the group and a TIM offset of indication information of a packet service in a current sending interval. A non-AP STA acquires the DTIM interval and the TIM offset after receiving a DTIM beacon of a segment count IE of a group where the non-AP STA locates.

In the embodiment, a current DTIM beacon carries segment count IEs of page1 and page2, wherein a segment count IE corresponding to page1 indicates that page1 is divided into two PSs, i.e. P1 S1 and P1S2, and a segment count IE corresponding to page2 indicates that page2 is divided into two PSs, i.e. P2S1 and P2S2. Non-AP STAs STA1 and STA2 belong to P1 S1 and P2S1 respectively. STA1 acquires, according to a DTIM interval of grouping indication information carried by the segment count IE corresponding to page1 and a TIM offset of indication information of a packet service in a current sending interval, a DTIM interval carrying the segment count IE of page1 and acquires a time offset of a TIM carrying indication information of a unicast service of STA1 relative to the DTIM. For example, the segment count IE of page1 indicates that the DTIM Interval is 2, representing that the segment count IE of page1 is sent at an interval of 2 DTIM beacons, and that the TIM Offset is 0, representing that a TIM corresponding to P1 S1 is the current DTIM. A TIM corresponding to P1 S1 is a TIM in a beacon which is offset backwards by 1 from the current DTIM. The segment count IE of page2 indicates that the DTIM Interval is 1, representing that the segment count IE of page2 is sent at an interval of 1 DTIM beacon, that the TIM Offset is 2, representing that a TIM corresponding to P2S1 is a TIM in a beacon which is offset backwards by 2 from the current DTIM. A TIM corresponding to P2S2 is a TIM in a beacon which is offset backwards by 3 from the current DTIM.

After receiving a DTIM beacon sent by the AP, STA1 determines, according to information including a page index and a segment count in a segment count IE, whether the page index and the segment count are a segment count IE of a group where STA1 belongs and a PS to which STA1 belongs, and is so, further acquires, according to the DTIM interval and the TIM Offset in the segment count IE of page1, a sending interval of the segment count IE of page1 and a TIM offset of P1S1 within a current sending interval, thereby acquiring a TBTT of a target beacon of the TIM carrying corresponding service indication within the current sending interval, and acquires corresponding service indication information TIM at the TBTT, as shown in Fig. 6.

### Embodiment 4

The embodiment is similar to Embodiment 3, and what is different is that an AP implicitly indicates to a STA of a group, the location of a TIM segment where the STA locates. The AP carries information including the page index, a segment count, and a sending interval and so on in a segment count IE carried by a DTIM beacon, and a STA may acquire a page indicated by the segment count IE and a segment count of the page according to the information. When more than one segment count IEs are carried in the DTIM beacon, a page indicated by a first segment count IE is page1 having a segment count SegmentCount1, a indicated first segment is denoted by P1S1, and a corresponding TIM segment is a current DTIM. TIM segments corresponding to subsequent segments correspond to TIMs of subsequent beacons in turn. A page indicated by a second segment count IE is page2 having a segment count SegmentCount2, a first indicated segment is denoted by P2S1 and a corresponding TIM segment is a TIM corresponding to a beacon which is offset by SegmentCount1 from a current DTIM. TIM segments corresponding to subsequent segments correspond to TIMs in subsequent beacons in turn. The value of SegmentCount1 in the embodiment is 2.

After receiving a DTIM beacon sent by the AP, STA1 determines, according to information including a page index and a segment count in a segment count IE, whether the information is a segment count IE of a group where STA1 locates and a PS to which STA1 belongs, and if so, further acquires, according to a DTIM interval in a segment count IE of page1, a sending interval of the segment count IE of page1 ,and determines a TBTT of a target DTIM beacon of the next segment count IE corresponding to STA1. The DTIM interval in the embodiment is 2, that is, every two DTIM beacons constitute an interval. In the meanwhile, STA1 performs calculation according to the number of segment count IEs carried in a current DTIM beacon and a relative sequence of segment count IEs corresponding to a page where STA1 locates, so as to acquire a TIM offset of a TIM segment corresponding to a PS to which STA1 belongs within a current sending interval, thereby acquiring a TBTT of a target beacon carrying corresponding service indication information TIM, and receiving a beacon at the TBTT to acquire corresponding service indication information TIM. In the embodiment, the current DTIM beacon carries two segment count IEs, wherein STA1 corresponds to a second segment count IE and belongs to a second PS in the page, wherein the value of the second PS is 2 and the second PS is denoted by P2S2, wherein a first segment count IE indicates that the page includes two segments. Therefore, a time offset, relative to the current DTIM, of a TIM segment corresponding to STA1 is SegmentCount1+page segment-1, i.e. 3 beacons, that is the third TIM beacon after the DTIM beacon, as shown in Fig. 6.

### Embodiment 5

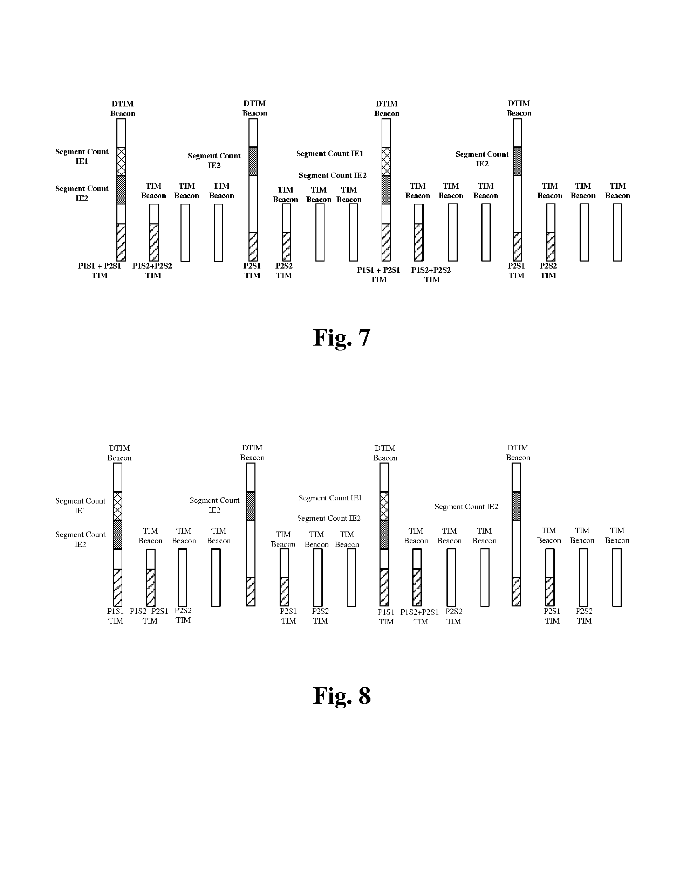

Similar to Embodiment 4, an AP implicitly indicates to a STA of a group, the location of a TIM segment where the STA locates. When a DTIM beacon carries more than one segment count IE, a page indicated by a first segment count IE is page1, a indicated first segment is denoted by P1 S1, and a corresponding TIM segment is a current DTIM. TIM segments corresponding to subsequent segments correspond to TIMs in subsequent beacons in turn. A page indicated by a second segment count IE is page2, a first indicated segment is denoted by P2S1 and a corresponding TIM segment is also the current DTIM. TIM segments corresponding to subsequent segments correspond to TIMs in subsequent beacons in turn, as shown in Fig. 7.

After receiving a DTIM beacon sent by the AP, STA1 determines, according to information of a page index in a segment count IE, whether the information is a segment count IE of a group where STA1 locates and a PS to which STA1 belongs, and if so, further acquires, according to a DTIM interval in a segment count IE of page1, a sending interval of the segment count IE of page1, and determines a TBTT of a target DTIM beacon of the next segment count IE corresponding to STA1. In the meanwhile, STA1 determines, according to the PS to which STA1 belongs, a time offset of a TIM segment corresponding to STA1 with the current DTIM, thereby acquiring a TBTT of a target beacon carrying corresponding service indication information TIM in a current sending interval, and receiving a beacon at the TBTT to acquire corresponding service indication information TIM. In the embodiment, STA1 belongs to a second segment of a second page, denoted by P2S2, and a time offset of a corresponding TIM segment with the current DTIM is 1 beacon, i.e. the first TIM beacon after the DTIM beacon, as shown in Fig. 7.

### Embodiment 6

Similar to Embodiment 3, a current DTIM beacon carries segment count IEs of page1 and page2, wherein a segment count IE corresponding to page1 indicates that page1 is divided into 2 PSs, abbreviated as P1S1 and P1S2, and a segment count IE corresponding to page2 indicates that page2 is divided into 2 PSs, abbreviated as P2S1 and P2S2. Non-AP STAs, STA1 and STA2 belong to P1 S1 and P2S1 respectively. STA1 acquires, according to a DTIM interval of grouping indication information carried by the segment count IE corresponding to page1 and a TIM offset of packet service indication information in a current sending interval, a DTIM interval carrying the segment count IE of page1 and acquires a time offset of a TIM carrying indication information of a unicast service of STA1 relative to the DTIM. For example, the segment count IE of page1 indicates that the DTIM Interval is 2, representing that the segment count IE of page1 is sent at an interval of 2 DTIM beacons, and that the TIM Offset is 0, representing that a TIM corresponding to P1 S1 is the current DTIM. The TIM corresponding to P1 S1 is a TIM in a beacon which is offset backwards by 1 from the current DTIM. The segment count IE of page2 indicates that the DTIM Interval is 1, representing that the segment count IE of page2 is sent at an interval of 1 DTIM beacon, that the TIM Offset is 1, representing that a TIM corresponding to P2S1 is a TIM in a beacon which is offset backwards by 1 from the current DTIM. A TIM corresponding to P2S2 is a TIM in a beacon which is offset backwards by 2 from the current DTIM, as shown in Fig. 8.

In another embodiment, a kind of software is further provided for implementing the technical solutions described in above embodiments and preferable embodiments.

In another embodiment, a storage medium is further provided, which stores the above software and includes, but is not limited to an optical disc, a floppy disk, hardware, an erasable memory, and so on.

Obviously, those skilled in the art should understand that the components or steps of the embodiments of the present invention may be implemented by general computing devices and centralized in a single computing device or distributed on a network consisting of multiple computing devices. Optionally, the components or steps may be implemented by program codes executable by the computing devices, so that they may be stored in a storage device and executed by the computing devices, and in some cases, the steps as illustrated or described may be implemented according to sequences different from those described herein, or they may be implemented by respectively fabricating them into integrated circuit components or by fabricating multiple components or steps in the components or steps into a single integrated circuit component. By doing so, the embodiments of the present invention are not limited to any specific combination of hardware and software.

The above are only preferred embodiments of the present invention and should not be used for limiting the present invention. For those skilled in the art, the present invention may have various modifications and changes. Any modifications, equivalent replacements, improvements and the like made within the spirit and principle of the present invention shall fall within the scope of protection of the present invention.

### Industrial Applicability

The technical solutions provided by the embodiments of the present invention may be applied in a sending processing and receiving processing process of service indication information. Sending time information is notified to STAs to instruct the STAs to receive, according to sending moments indicated by the sending time information, service indication information corresponding to the STAs indicated by grouping indication information, thereby solving the technical problems in the related art that sending of service indication information is not flexibly configured yet, it is necessary to monitor each wireless frame, and the like, so as to allow service indication information (such as paging information of a group user) to be flexibly configured, sent and quickly acquired.

## Claims

1. A method for processing sending of service indication information, applied to an Access Point, AP, of a Wireless Local Area Network, WLAN, and comprising:
acquiring sending time information of grouping indication information of Stations, STAs, in the WLAN, wherein the sending time information is used for instructing the STAs to receive, according to sending moments indicated by the sending time information, service indication information corresponding to the STAs indicated by the grouping indication information;
notifying the STAs indicated by the grouping indication information of the sending time information.

2. The method according to claim 1, wherein the sending time information comprises at least one of the followings:
a sending interval of the grouping indication information, sending time offset information of service indication information in the sending interval, and a designated sending moment of the service indication information in the sending interval, wherein the sending interval is used for indicating a time interval between adjacent grouping indication information.

3. The method according to claim 2, wherein notifying the STAs indicated by the grouping indication information of the sending time information comprises:
sending a wireless frame to each of the STAs indicated by the grouping indication information, wherein the wireless frame carries the sending time information and the grouping indication information.

4. The method according to claim 3, wherein the sending time offset information comprises:
a time offset, relative to the wireless frame, of service indication information corresponding to a designated STA among the STAs indicated by the grouping indication information in a sending interval of current grouping indication information.

5. The method according to claim 4, wherein the designated STA comprises:
an STA of a first segment among STAs of a plurality of segments indicated by the grouping indication information, wherein service indication information corresponding to STAs of various segments after the STA of the first segment is arranged after service indication information corresponding to the STA of the first segment in turn.

6. The method according to claim 3, wherein the sending time offset information is carried in the wireless frame by one of the following methods:
indicating the sending time offset information by a designated field;
indicating the sending time offset information implicitly by the grouping indication information.

7. The method according to claim 6, wherein indicating the sending time offset information implicitly by the grouping indication information comprises:
performing, by the STAs indicated by the grouping indication information, calculation according to segment information in the grouping indication information, and/or a sequence of the grouping indication information to obtain the sending time offset information.

8. A method for processing the receiving of service indication information, applied to a Station, STA, of a Wireless Local Area Network, WLAN, and comprising:
receiving sending time information from an Access Point, AP, in the WLAN;
receiving, according to sending moments indicated by the sending time information, service indication information corresponding to STAs indicated by grouping indication information.

9. The method according to claim 8, **characterized in that** the sending time information comprises at least one of the followings:
a sending interval of the grouping indication information, sending time offset information of service indication information in the sending interval, and a designated sending moment of the service indication information in the sending interval, wherein the sending interval is used for indicating a time interval between adjacent grouping indication information.

10. The method according to claim 9, **characterized in that** the method further comprises:
receiving the grouping indication information according to the sending interval.

11. A device for processing the sending of service indication information, applied to an Access Point, AP, of a Wireless Local Area Network, WLAN, and **characterized by** comprising:
an acquiring component, configured to acquire sending time information of grouping indication information of STAs in the WLAN, wherein the sending time information is used for instructing the STAs to receive, according to sending moments indicated by the sending time information, service indication information corresponding to the STAs indicated by the grouping indication information;
a notifying component, configured to notify the STAs indicated by the grouping indication information of the sending time information.

12. The device according to claim 11, **characterized in that** the acquiring component is configured to acquire the sending time information comprising at least one of the following content:
a sending interval of the grouping indication information, sending time offset information of service indication information in the sending interval, and a designated sending moment of the service indication information in the sending interval, wherein the sending interval is used for indicating a time interval between adjacent grouping indication information.

13. A device for processing the receiving of service indication information, applied to a Station, STA, of a Wireless Local Area Network, WLAN, **characterized by** comprising:
a first receiving component, configured to receive sending time information from an Access Point, AP, in the WLAN;
a second receiving component, configured to receive, according to sending moments indicated by the sending time information, service indication information corresponding to the STAs indicated by the grouping indication information.

14. The device according to claim 13, **characterized in that** the first receiving component is configured to receive the sending time information comprising at least one of the following content:
a sending interval of the grouping indication information, sending time offset information of service indication information in the sending interval, and a designated sending moment of the service indication information in the sending interval, wherein the sending interval is used for indicating a time interval between adjacent grouping indication information.
